# EUROPEAN PATENT APPLICATION

(11) **EP 1 300 280 A2**
(43) Date of publication of application: **09.04.2003**
(21) Application number: 02256427.2
(22) Date of filing: 13.09.2002
(51) Int. Cl.: B60N 2/28

(54) **Child safety seat**

(30) Priority: 03.10.2001 GB 0123712
(71) Applicant: BRITAX RÖMER Kindersicherheit GmbH, D-89024 Ulm (DE)
(72) Inventor: Maier, Dieter, 89537 Giengen (DE); Schall, Hermann, 89189 Neenstetten (DE)
(74) Representative: Hollinghurst, Antony

(57) **Abstract**

A rearward facing child safety seat for use in a vehicle, comprises a seat structure (50) having a seat portion and a backrest portion (48) for supporting a seat occupant (40) and a support surface (32) for resting on a vehicle seat cushion. A releasable connector (38) is mounted on a link (52) for engagement with a standard anchorage unit associated with the vehicle seat. The link (52) projects from an end of the seat portion of the child seat structure opposite to the backrest portion (48) and is attached to the child seat structure (50) by a coupling joint (54) located above the support surface (32) so as to permit angular movement of the child seat structure (50) relative to the link (52).

## Description

This invention relates to a child safety seat for use in a vehicle of the type comprising a seat structure having a seat portion and a backrest portion for supporting a seat occupant, a support surface for resting on a vehicle seat cushion, a link projecting from the seat structure, and a releasable connector mounted on the link for engagement with a standard anchorage unit associated with the vehicle seat.

It is well known for a child safety seat to rest on a vehicle seat and to be secured thereon by the corresponding vehicle seat belt. The disadvantage of this arrangement is that, even if the vehicle seat belt is pulled very tight during installation, the resilience of the belt, will permit undesirable movement of the child seat relative to the vehicle in the event of sudden deceleration, for example, during an accident. In order to overcome this disadvantage, it has been proposed to provide vehicle seats with standard anchorage units at agreed locations for engagement by releasable connectors which are attached to the child seat structure by links. Such anchorage units will be referred to herein as "standard anchorage units".

EP-A-0952032 discloses a child safety seat for use with two standard anchorage units located near the rear edge of the vehicle seat cushion and the bottom of the vehicle seat back. This arrangement is subject to the disadvantage that, in the event of an accident, the child seat tends to rotate about the standard anchorage units, compressing the front part of the vehicle seat cushion and allowing undesirable forward movement of the head of a child occupant of the child seat. EP-A-1090804 discloses a forward facing a child safety seat in which this disadvantage is mitigated by pivotally attaching the links to the child seat structure at a pivot location above the base support surface. With this arrangement, both the front and rear edges of the base support surface are pressed downwards into the vehicle seat cushion simultaneously. This results in a reduction in the distance of this centre of gravity from the anchorage units and therefore a corresponding reduction in the rotational moment exerted by the inertia of the child seat

The present invention aims to provide similar advantages for a rearward facing child safety seat.

According to the invention, in a rearward facing child safety seat of the type described above, the link projects from an end of the seat portion of the child seat structure opposite to the backrest portion and is attached to the child seat structure by a coupling joint located above the base support surface so as to permit angular movement of the child seat structure relative to the link.

Embodiments of the invention will now be described, by way of example, with reference to the accompanying drawings, in which:
Figure 1 is a perspective view of a vehicle seat equipped with standard anchorage units;
Figure 2 is a schematic side view of a known rearward facing child seat installed on the vehicle seat shown in Figure 1 with a test dummy on the child seat;
Figure 3 is a side view similar to Figure 2 showing the child seat and dummy after an initial phase of sudden deceleration of the vehicle;
Figures 4 and 5 are schematic side views, similar to Figures 2 and 3 of a first embodiment of the invention;
Figure 6 is a schematic side view of the embodiment shown in Figures 4 and 5, after a second phase of deceleration;
Figures 7 and 8 are schematic side views, similar to Figures 4 and 5 of a second embodiment of the invention;
Figures 9 and 10 are schematic side views, similar to Figures 4 and 5 of a third embodiment of the invention;
Figures 11 and 12 are schematic side views, similar to Figures 4 and 5 of a second embodiment of the invention;
Figures 13 and 14 are schematic side views, similar to Figures 4 and 5 of a third embodiment of the invention; and
Figures 15 and 16 are schematic side views of amodified version of the embodiment shown in Figures 4 to 6.

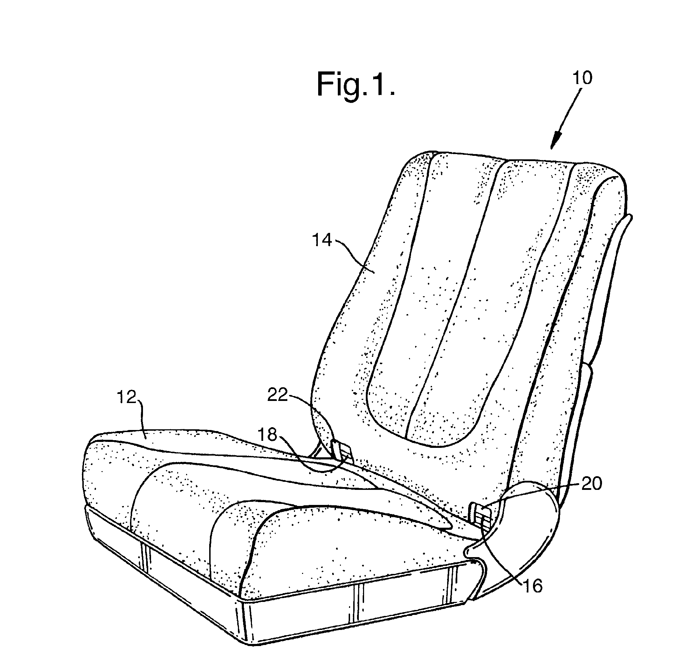

Figure 1 shows a vehicle seat 10 equipped with two standard anchorage units according to the first proposal. The seat 10 comprises a seat cushion 12 and a backrest 14. The two standard anchorage units comprise transversely extending rods 16 and 18 which are accessible through openings 20 and 22 in the bottom of the backrest and which are rigidly secured to the frame (not shown) of the seat 10.

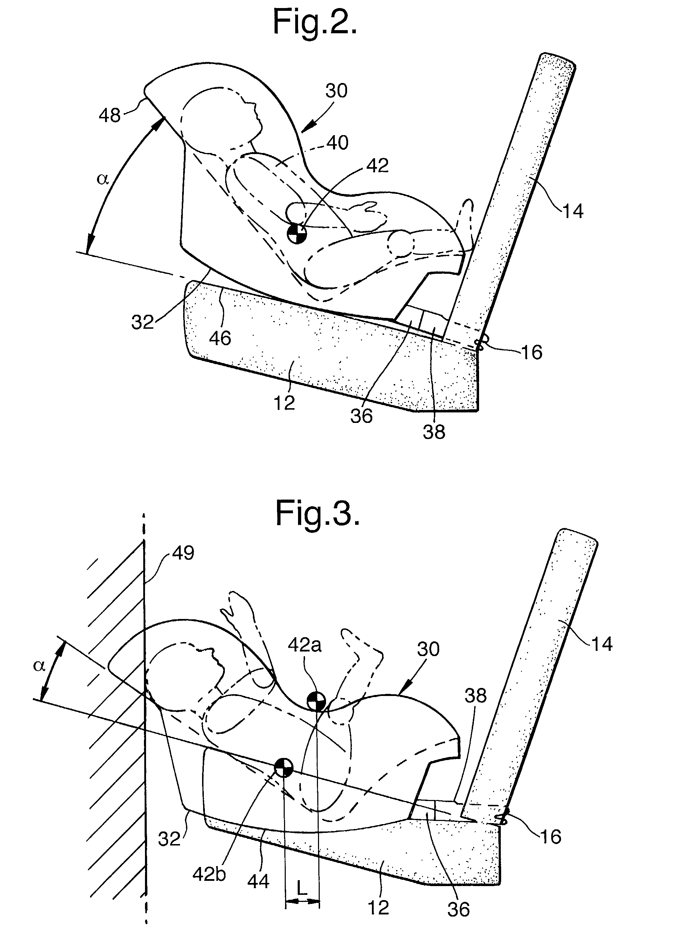

Figure 2 shows a known rearward facing child seat 30 having a base support surface 32 resting on the seat cushion 12 of the vehicle seat 10. A rigid link 36 projects rearwardly just above the base support surface 32 and is rigidly secured to the child seat 30 so as to be fixed parallel with the base support surface 32. A releasable connector 38 engages with the standard anchorage unit 16. A similar releasable connector (not shown), on another rigid link, engages with the other standard anchorage unit 18. The seat is occupied by a test dummy 40 having a reference mark 42 on the side of its body near its centre of gravity. The dummy 40 is retained in the child seat 30 by a conventional harness (not shown).

If the vehicle seat 10 is subject to sudden deceleration in the normal direction of travel, the child seat 30 tends to pivot in the counter-clockwise direction (as viewed in Figures 2 and 3) about the standard anchorage units 16 and 18. This results in compression of the part 44 of the vehicle seat cushion 12 which is under the front edge of the base surface 32 and pivotal movement of the child seat 30 as shown in Figure 3, causing a decrease of the angle *á* between the normal position of the top surface 46 of the vehicle seat cushion 12 and the backrest 48 of the child seat 30. The reference mark 42 moves forwards through a distance L from its original position (shown at 42a in Figure 3) to an new position 42b. This movement allows the head of the dummy to come into contact with a reference surface 49 positioned in front of the vehicle seat 10, thus exceeding the extent of acceptable forward movement.

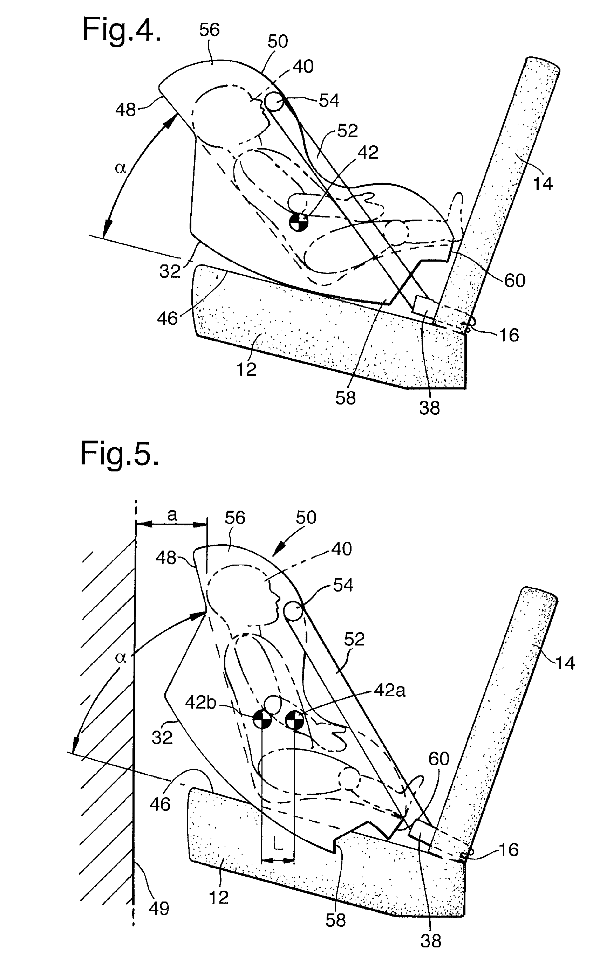

Figure 4 show a child seat 50 in accordance with the invention. The links 36 are replaced by longer links 52 which are attached by pivot joints 54 to side wings 56 of the child seat 50 in the vicinity of the head of the dummy 40, i.e. well above the centre of gravity of the child seat 50 and the dummy 40. Releasable connectors 38 are mounted on the other ends of the links 52 and engage with respective anchorage units 16 and 18.

During sudden deceleration, the child seat 50 pivots in a clockwise direction about the pivot joints 54 resulting in an increase in the angle *á*. Consequently, although the reference mark 42 still moves forwards through approximately the same distance *L,* a substantial clearance a remains between the head of the dummy 40 and the reference surface 49.

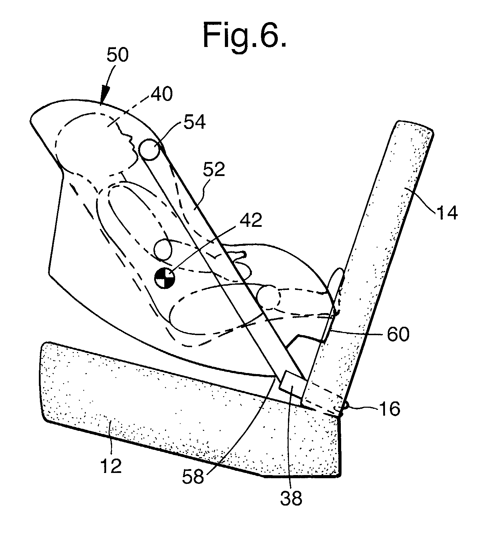

After its initial phase of movement, the child seat 50 is subject to rebound. Counter-clockwise angular movement of the child seat 30 is limited by a stop 58 which comes into abutment with the adjacent link 52, as shown in Figure 6. The result is that the foot end 60 of the child seat 30 abuts against the vehicle seat back 14 to limit clockwise angular movement about the anchorage units 16 and 18.

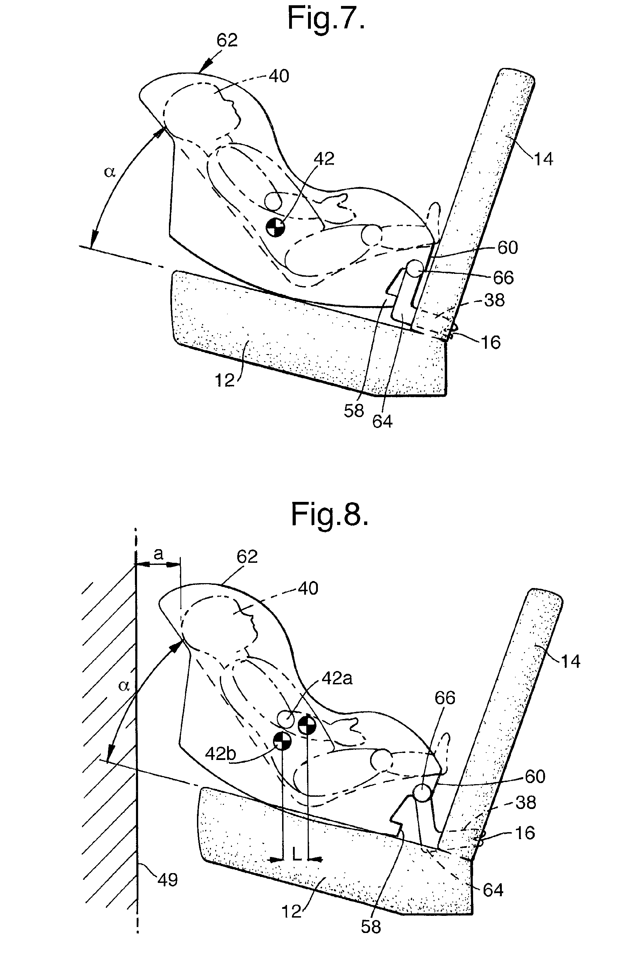

Figures 7 and 8 show a child seat 62 in which the relatively long links 52 are replaced by more compact L-shaped links 64 attached by pivot joints 66 to the foot end 60 of the child seat 62, above the stop 58. In the event of sudden deceleration, there is no significant change in the angle α. Consequently, although the child seat 62 is more compact, the performance is not as good as that of the child seat 50 of Figures 4 to 6. Nevertheless, there is an acceptable clearance a between the head of the dummy 40 and the reference surface 49.

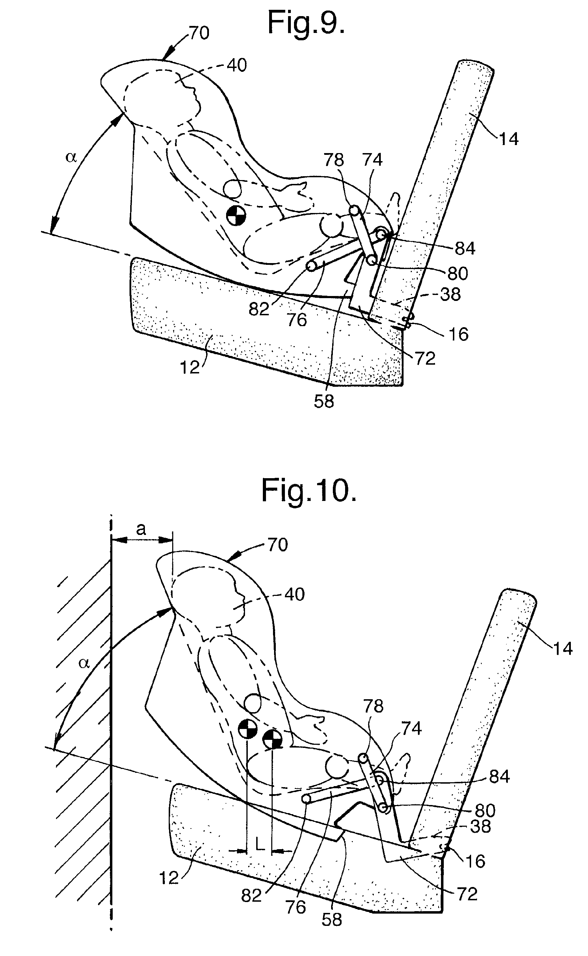

In Figures 9 and 10, a child seat 70 has L-shaped links 72 attached to its releasable connectors 38. However, each link 72 is connected to the child seat 70 by a first and second auxiliary links 74 and 76. The first auxiliary link 74 has one end attached to the child seat 70 by a first pivot joint 78 and another end attached to the L-shaped link 72 by a second pivot joint 80. The second auxiliary link 76 is longer than the link 74 and has one end attached to the child seat 70 by a third pivot joint 82 located below the first pivot joint and another end attached to the link by a fourth pivot joint 84 located above the second pivot joint. The effect of this is that, in the event of sudden deceleration, the child seat turns in a clockwise direction so as to increase the angle *á*. This results in an increased clearance a between the head of the dummy 40 and the reference surface 49.

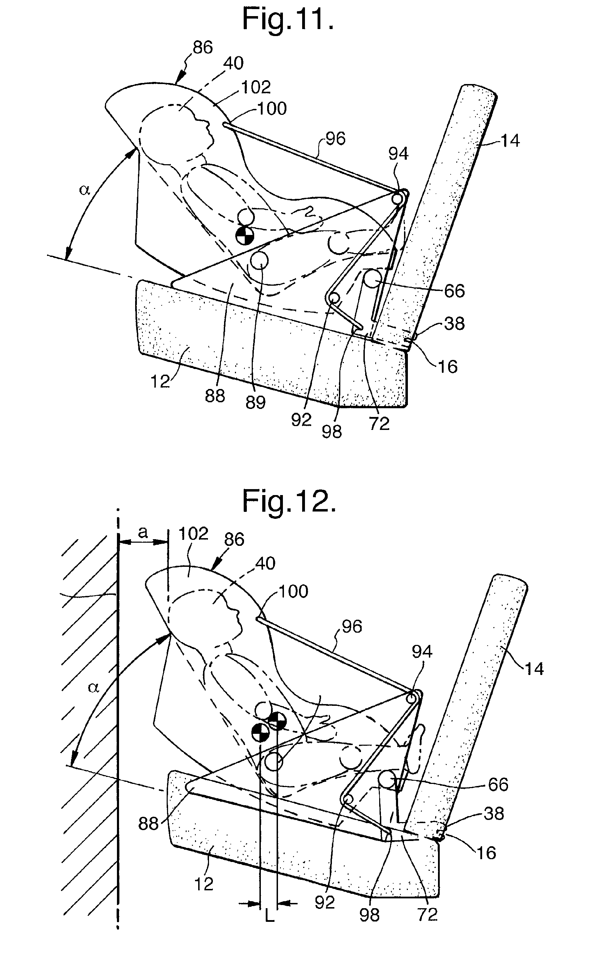

Figures 11 and 12 show a child seat 86 having L-shaped links 72 attached to its releasable connectors 38, as in Figures 7 and 8. In addition, a base rests on the seat cushion 12 and has side panels 88 pivotally attached to each side of the child seat 86 by respective pivot pins 89. Each side panel carries a first pulley 92 below, and a second pulley 94 above, the pivot joint 66 attaching the corresponding L-shaped link 72 to the child seat 86. A flexible cable 96 extends from a point 98 on the L-shaped link 72 at the junction between its two limbs, round the first pulley 92, then round the second pulley 94, to a point 100 on the corresponding side wing 102 of the seat 86. In the event of an accident, the downward movement of the L-shaped link 72 causes the cable 96 to pull the upper part of the child seat 86 rearwardly, thus increasing the clearance a between the head of the dummy 40 and the reference surface 49.

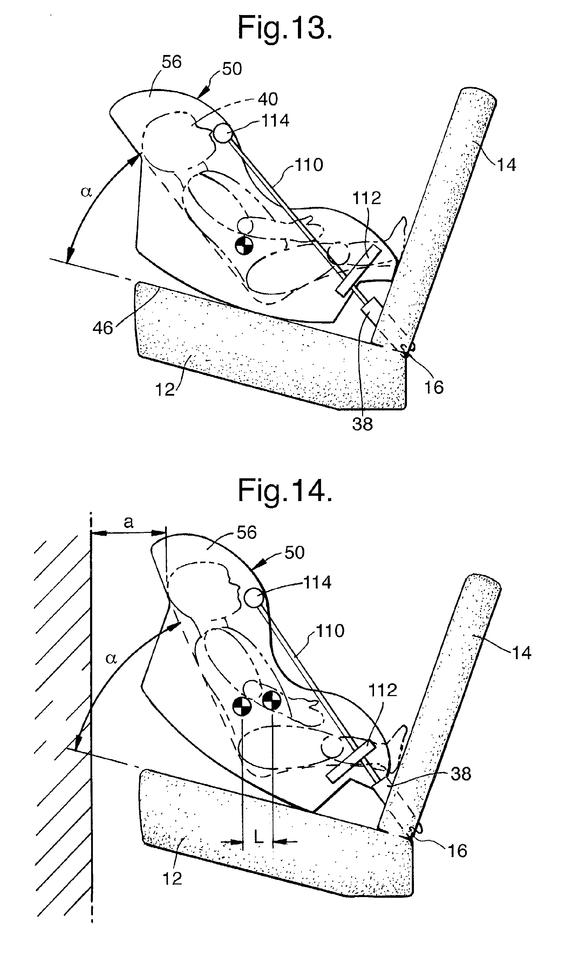

Figures 13 and 14 show a modified version of the child seat 50 illustrated in Figures 4 and 5, corresponding parts being denoted by the same reference numerals. The long links 52 are replaced by cables 110 which extend from the releasable connectors 38, through respective slots formed in guide members 112 mounted on the lower parts of the side wings 56, to attachment points 114 on the upper parts of the side wings 56. Operation is as described above with reference to Figures 4 and 5, the guide members 112 serving to limit the range of clockwise movement of the seat 50 during rebound.

In any embodiment of the invention, the links may be detachably connected to the child seat. This allows the child seat to be removed from the vehicle seat 10 and carried around without being encumbered by the links. For example, Figures 15 and 16 show the child seat 50 of Fígures 4 to 6 with the pivot joints 54 attached to respective releasable connectors 116 that latch with complementary connectors 118 on the side wings 56.

## Claims

1. A rearward facing child safety seat for use in a vehicle, of the type comprising a seat structure (50, 62, 70, 86) having a seat portion and a backrest portion (48) for supporting a seat occupant (40), a support surface (32) for resting on a vehicle seat cushion, a link (52, 64, 72, 110) projecting from the seat structure (50, 62, 70, 86), and a releasable connector (38) mounted on the link (52, 64, 72, 110) for engagement with a standard anchorage unit associated with the vehicle seat, **characterised in that** the seat is rearward facing and the link (52, 64, 72, 110) projects from an end of the seat portion of the child seat structure opposite to the backrest portion (48) and is attached to the child seat structure (50, 62, 70, 86) by a coupling joint (54) located above the support surface (32) so as to permit angular movement of the child seat structure (50, 62, 70, 86) relative to the link (52, 64, 72, 110).

2. A child safety seat according to claim 1, further comprising stop means (58) arranged to restrict the extent of angular movement of the child seat structure (50, 62, 70, 86) relative to the link (52, 64, 72, 110) in a direction such that the bottom of the child seat structure (50, 62, 70, 86) moves towards the releasable connector (38).

3. A child safety seat according to claim 2, wherein the link (52, 64, 72) is rigid and the stop means comprises a projection (58) on the seat structure arranged to abut against a complementary formation on the link (52, 64, 72, 110).

4. A child safety seat according to claim 2, wherein the link (110) is flexible and the stop means comprises a slot through which the link (52, 64, 72, 110) extends.

5. A child safety seat according to claim 1, 2, 3 or 4, wherein the link (52, 110) is connected to the backrest portion of the child seat structure at a location (54, 114) remote from the seat portion thereof.

6. A child safety seat according to claim 5, wherein the backrest portion has a pair of side wings adapted to extend on each side of a seat occupant's head and the link (52, 110) is attached to one of said side wings.

7. A child safety seat according to claim 1, 2 or 3, wherein the link (64, 72, 110) is connected to the seat portion of the child seat structure at a location above the support surface and remote from the backrest portion thereof.

8. A child safety seat according to claim 7, wherein the link (64, 72) is L-shaped with a first limb carrying the connector (38) and a second limb having a free end pivotally attached to the child seat structure (62, 70, 86).

9. A child safety seat according to claim 8, wherein the height of the pivot location above the base surface is at least 30mm.

10. A child safety seat according to claim 7, 8 or 9, wherein the link comprises a main link (72) which is connected to the child structure by both a first auxiliary link (74) which has one end attached to the child seat structure by a first pivot joint (78) and another end attached to the main link (72) by a second pivot joint (80) and a second auxiliary link (76) which has one end attached to the child seat structure (70) by a third pivot joint (82) located below the first pivot joint (78) and another end attached to the main link (72) by a fourth pivot joint (84) located above the second pivot joint (80).

11. A child safety seat according to claim 7, 8 or 9, wherein the seat structure comprises a base (88) to which the link (72) is attached by a pivot joint (66), a seat body (86) pivotally mounted on the base (88) for angular movement about a seat pivot axis (89), a first cable guide (92) mounted on the base below said pivot joint (66), a second cable guide (94) mounted on the base (88) above said pivot joint (66), and a cable (96) having a first end secured to the link (52, 64, 72, 110) at a location (98) below said pivot joint (66), said cable (96) extending round said first cable guide (92), then round said second cable guide (94) and having a second end secured to said seat body at a location (100) above said pivot axis (89).
